# EUROPÄISCHE PATENTSCHRIFT

(11) **EP 0 694 378 B1**
(45) Veröffentlichungstag und Bekanntmachung des Hinweises auf die Patenterteilung: **11.04.2001**
(21) Anmeldenummer: 95111121.0
(22) Anmeldetag: 15.07.1995
(51) Int. Cl.: B29C 47/64, B29C 47/40, B29B 7/48

(54) **Zwei-Wellen-Schneckenmaschine, insbesondere Zwei-Wellen-Extruder**
Twin screw extruder
Extrudeuse à deux vis

(30) Priorität: 26.07.1994 DE 4426441
(43) Veröffentlichungstag der Anmeldung: 31.01.1996
(73) Patentinhaber: Krupp Werner & Pfleiderer GmbH, 70469 Stuttgart (DE)
(72) Erfinder: Scheuring, Bernhard, Dipl.-Ing., D-71563 Affalterbach (DE); Schlipf, Edgar, Dipl.-Ing. (FH), D-70372 Stuttgart (DE)
(74) Vertreter: Rau, Manfred, Dr. Dipl.-Ing.

(56) Entgegenhaltungen:
- EP-A- 0 269 913
- DE-A- 3 738 700
- US-A- 3 195 868

## Beschreibung

Die Erfindung betrifft eine Zwei-Wellen-Schneckenmaschine nach dem Oberbegriff des Anspruches 1.

Zum Einmischen von Füll- und Verstärkungsstoffen in Zwei-Wellen-Extrudern werden verschiedenartige Mischelemente in unterschiedlichen Anordnungen eingesetzt. Diese Mischelemente bewirken durch ihre dispersive und distributive Mischwirkung ein homogenes Einmischen der Füll- und Verstärkungsstoffe in eine Kunststoffmatrix. Beim Einmischen von Verstärkungsstoffen, beispielsweise Glasfasern, in eine Kunststoffmatrix sollte die Länge der einzelnen Fasern sowenig wie möglich reduziert werden, damit das Endprodukt möglichst gute mechanische Eigenschaften hat. Dem entgegen steht jedoch die Forderung nach thermischer und mechanischer Homogenität des Produkts. Mit den bekannten Mischelementen ist es bisher nicht gelungen, eine geringe Faserschädigung bei ausreichender Homogenität zu realisieren, da der dispersive Anteil dieser bekannten Mischelemente zu hoch ist.

Aus der US-A-3 195 868 ist ein als Zwei-Wellen-Schneckenmaschine ausgebildeter kontinuierlicher Mischer nach dem Oberbegriff des Anspruches 1 bekannt, der zwei zueinander parallele einander teilweise durchdringende Gehäusebohrungen in einem Gehäuse aufweist. In jeder Gehäusebohrung ist eine Welle angeordnet, die in gleicher Drehrichtung antreibbar ist. Auf den Wellen sind einander paarweise zugeordnete Mischelemente angeordnet, an denen beim Umlauf einander hinterschneidende Mischschaufeln angebracht sind. Diese Mischschaufeln sind an paddelförmigen Scheiben angebracht, die gleichzeitig als Knetblöcke ausgebildet sind. Sie lassen einen ungehinderten Durchtritt des Materials in Förderrichtung durch das Gehäuse zu. Die distributive Wirkung dieser bekannten Schneckenmaschine ist daher nicht zufriedenstellend. Eine ähnliche Ausgestaltung von Knetblöcken ist auch aus der EP 0 269 913 A2 bekannt.

Der Erfindung liegt die Aufgabe zugrunde, eine Schneckenmaschine der gattungsgemäßen Art so auszugestalten, daß insbesondere für faserförmige Einlagen und Verstärkungsstoffe eine homogene Verteilung bei möglichst geringer Faserschädigung und ausreichender Benetzung in der Kunststoffmatrix erreicht wird.

Diese Aufgabe wird erfindungsgemäß durch eine Zwei-Wellen-Schneckenmaschine gemäß Anspruch 1 gelöst. Zahlreiche vorteilhafte und zum Teil erfinderische Ausgestaltungen ergeben sich aus den abhängigen Ansprüchen.

Die Erfindung ermöglicht es insgesamt, daß das die Schneckenmaschine durchströmende Material zwangsweise durch eine zwischen den Mischelementen gebildete Mischkammer geführt und hierbei wiederum zwangsweise der Mischwirkung der Schaufeln ausgesetzt wird. Je nach Gestaltung kann der dispersive oder distributive Anteil der Mischschaufeln größer oder kleiner sein, wobei ein hoher distributiver und ein geringer dispersiver Anteil grundsätzlich erwünscht ist, um eine Schädigung von z.B. aus Fasern und insbesondere aus Glasfasern bestehenden Verstärkungsstoffen möglichst gering zu halten.

Weitere Merkmale, Vorteile und Einzelheiten der Erfindung ergeben sich aus der nachfolgenden Beschreibung eines Ausführungsbeispieles anhand der Zeichung. Es zeigt:
- Fig. 1: einen Zwei-Wellen-Extruder mit aufgebrochen dargestelltem Gehäuse in Draufsicht,
- Fig. 2: einen Teilausschnitt aus Fig. 1 in vergrößerter Darstellung,
- Fig. 3: ein Paar von Mischelementen in Draufsicht entsprechend der Darstellung in den Fig. 1 und 2,
- Fig. 4: einen Schnitt durch die Mischelemente entsprechend der Schnittlinie IV-IV in Fig. 3 und
- Fig. 5: eine Darstellung der Mischelemente entsprechend Fig. 4 in einer anderen Drehwinkelstellung der Mischelemente.

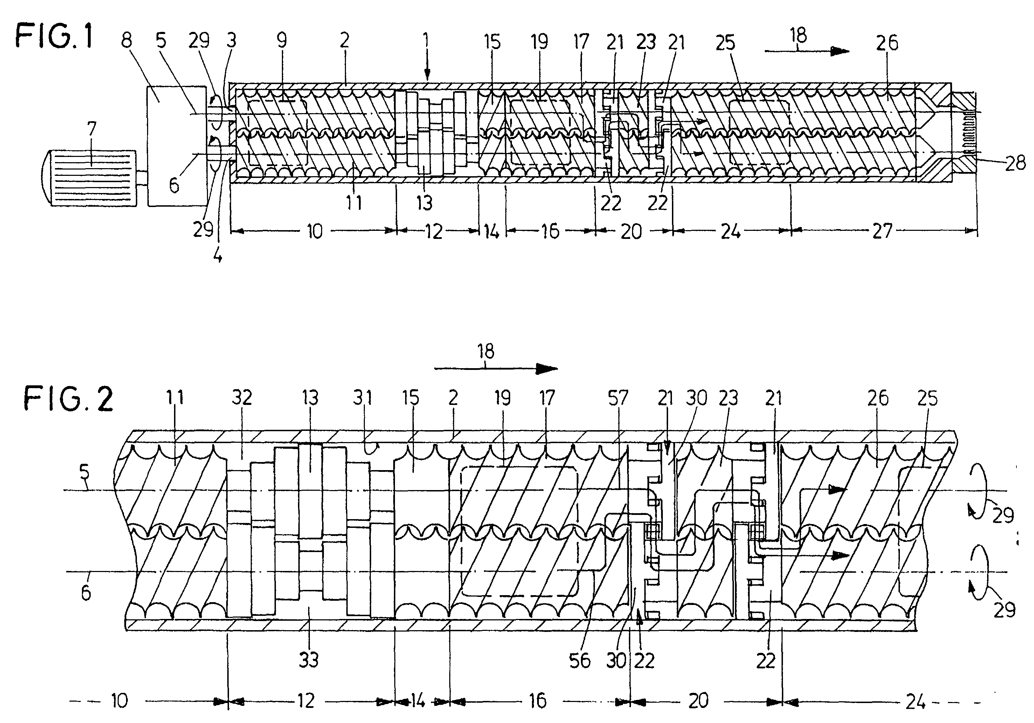

Fig. 1 zeigt einen Zwei-Wellen-Extruder 1, dessen Gehäuse 2 aufgebrochen dargestellt ist. Er weist zwei Wellen 3, 4 auf, deren Achsen 5, 6 parallel zueinander verlaufen. Der Antrieb der Wellen 3, 4 erfolgt mittels eines Motors 7 über ein Verzweigungsgetriebe 8. Benachbart zum Getriebe 8 ist im Gehäuse 2 ein nur angedeuteter Aufgabe-Trichter 9 für im Extruder 1 aufzuschmelzendes Polymer vorgesehen. Unter diesem Trichter 9 und im Anschluß daran ist eine Einzugszone 10 ausgebildet, in der auf den Wellen 3, 4 Förder-Schneckenelemente 11 angeordnet sind. Im Anschluß daran sind in einer Aufschmelzzone 12 auf den Wellen 3, 4 Knetblöcke 13 angebracht. Daran schließt sich eine Rückstauzone 14 an, in der auf den Wellen 3, 4 Rückförder-Schneckenelemente 15 angebracht sind, die eine entgegengesetzte Schneckenwindungsrichtung wie die Förder-Schneckenelemente 11 haben. An die Rückstauzone 14 schließt sich eine Zugabezone 16 an, in der wiederum auf den Wellen 3, 4 Förder-Schneckenelemente 17 angebracht sind, die in Förderrichtung 18 des Extruders 1 fördern. Unmittelbar hinter den Rückförder-Schneckenelementen 15 mündet ein Zugabe-Trichter 19 in das Gehäuse 2, der ebenfalls nur angedeutet ist. Durch ihn werden z.B. Glasfasern in die Schmelze eingegeben.

Der Zugabezone 16 schließt sich eine Mischzone 20 an, in der auf den Wellen 3, 4 jeweils paarweise hinterschneidende Mischelemente 21, 22 angebracht sind, die nachfolgend im Detail beschrieben sind. Es sind zwei Paare von hinterschneidenden Mischelemente 21, 22 vorgesehen, zwischen denen sich relativ kurze Förder-Schneckenelemente 23 finden. An diese Mischzone 20 schließt sich eine Entgasungszone 24 an, in der im Gehäuse 2 eine ebenfalls nur angedeutete Entgasungsöffnung 25 ausgebildet ist. In dieser Entgasungszone 24 sind auf den Wellen 3, 4 Förder-Schneckenelemente 26 angebracht, die das Polymer, in das Füll- und Verstärkungsstoffe eingemischt sind, in Förderrichtung 18 zu einer Austragszone 27 mit einer sogenannten Lochleiste als Austragsorgan 28 fördern.

Fig. 2 zeigt einen Teilausschnitt des Extruders 1 in vergrößertem Maßstab vom Ende der Einzugszone 10 bis zur Entgasungsöffnung 25. Wie auch hieraus entnehmbar ist, kämmen die Schneckenelemente 11, 15, 17, 26 mit einander, d.h. sie werden gleichsinnig angetrieben und zwar in Drehrichtung 29.

Die einander paarweise zugeordneten hinterschneidenden Mischelemente 21, 22 sind identisch ausgebildet. Sie weisen eine geschlossene Ringscheibe 30 auf, die sich bis zur jeweils zugeordneten teilkreiszylindrischen Innenwand 31 der Gehäusebohrung 32 bzw. 33 erstreckt, in der sich die jeweilige Welle 3 bzw. 4 befindet, wobei zwischen der zylindrischen Außenumfangsfläche 34 der Ringscheibe 30 und der Innenwand 31 der jeweiligen Gehäusebohrung 32 bzw. 33 ein Spalt 35 von einigen Zehnteln bis zu wenigen Millimetern Breite verbleibt.

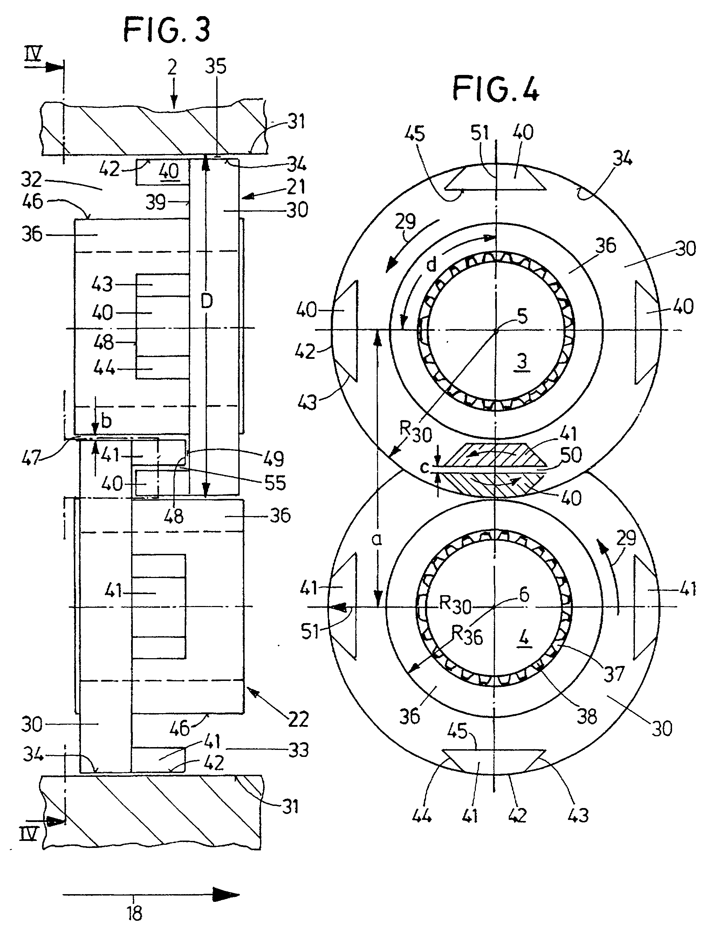

Auf der jeweiligen geschlossenen Ringscheibe 30 ist ein Ringzylinder 36 angebracht bzw. einstückig mit der Ringscheibe 30 ausgebildet, wobei Ringscheibe 30 und Ringzylinder 36 jeweils koaxial zur jeweiligen Achse 5 bzw. 6 angeordnet sind. Wie Fig. 4 entnehmbar ist, ist an der Innenfläche des jeweiligen Ringzylinders 36 und entsprechend auch an der Innenseite der Ringscheibe 30 eine Innen-Verzahnung 37 ausgebildet, die einer Außen-Verzahnung 38 auf der Welle 3 bzw. 4 entspricht, so daß die Mischelemente 21 bzw. 22 drehfest auf den Wellen 3 bzw. 4 angebracht werden können. Auf die gleiche Weise werden im übrigen die anderen oben beschriebenen Elemente auf den Wellen 3 bzw. 4 drehfest angebracht.

Auf der Seite, auf der der jeweilige Ringzylinder 36 von der Ringscheibe 30 vorspringt, sind an der dem Ringzylinder 36 benachbarten Stirnseite 39 der Ringscheibe 30 Mischschaufeln 40 bzw. 41 angebracht, die jeweils eine Außenflanke 42 aufweisen, die bündig mit der Außenumfangsfläche 34 der jeweiligen Ringscheibe 30 ist, dieser also entspricht. Sie weisen weiterhin eine in Drehrichtung 29 voreilende Flanke 43 und eine in Drehrichtung 29 nacheilende Flanke 44 und eine innere Flanke 45 auf, die dem Ringzylinder 36 zugewandt ist. Die Mischschaufeln 40 des Mischelementes 21 erstrecken sich entgegen der Förderrichtung 18, während sich die Mischschaufeln 41 des zugeordneten Mischelementes 22 in Förderrichtung 18 erstrecken.

Die beiden Achsen 5, 6 der Wellen 3, 4 weisen einen Abstand a auf, der aufgrund der Durchdringung der beiden Gehäusebohrungen 32, 33 kleiner ist als der Durchmesser D der Gehäusebohrungen 32, 33, die identischen Durchmesser haben. Die Ringscheiben 30 weisen einen Radius R₃₀ auf, der aufgrund des Spaltes 35 geringfügig kleiner ist als D/2. Die Ringzylinder 36 weisen einen Radius R₃₆ auf, wobei zwischen der Außenumfangsfläche 34 der Ringscheibe 30 eines Mischelementes 21 bzw. 22 und der Außenumfangsfläche 46 des Ringzylinders 36 des anderen zugeordneten Mischelementes 22 bzw. 21 ein Spalt 47 mit der Breite b verbleibt. Es gilt die Beziehung a = R₃₀ + R₃₆ + b. Die Breite b des Spaltes 47 kann gleich der Breite des Spaltes 35 sein. Wenn zwei Mischelemente 21, 22 entsprechend der Darstellung in den Fig. 1 bis 3 ineinander gesteckt sind, dann erstrecken sich jeweils die Stirnseiten 48 der Mischschaufeln 40 bzw. 41 unter Freilassung eines kleinen Spaltes 49 bis zur zugewandten Stirnseite 39 der Ringscheibe 30 der jeweils anderen Mischschaufel 41 bzw. 40.

Die inneren Flanken 45 zweier Mischschaufeln 40 bzw. 41 der beiden Mischelemente 21, 22 laufen aufgrund der gleichen Drehrichtung 29 der
Wellen 3, 4 jeweils paarweise aneinander vorbei. Sie sind ebenflächig als Sekanten zu den zylindrischen Außenumfangsflächen 34 der Ringscheiben 30 ausgebildet. Bei der in den Fig. 3 und 4 dargestellten völligen Überdeckung zweier solcher einander zugeordneter Mischschaufeln 40, 41 verlaufen die inneren Flanken 45 der beiden Mischschaufeln 40, 41 parallel zueinander, wobei zwischen ihnen ein Spalt 50 freigelassen ist, dessen
Breite c einige Zehntel Millimeter bis zu wenigen Millimetern, je nach der Größe von R₃₀ und R₃₆, beträgt. Wenn die beiden Mischschaufeln 40 bzw. 41 ineinanderlaufen oder wieder auseinanderlaufen, ist der Spalt 50 jeweils größer; er hat sein kleinstes Maß c, wenn die beiden inneren Flanken 45 parallel zueinander sind, wenn also die beiden Mischschaufeln 40, 41 einander völlig überdecken und ihre Symmetriebenenen 51 ineinander übergehen und beide Achsen 5, 6 schneiden.

Alle Mischschaufeln 40 bzw. 41 sind gleich und zwar spiegelsymmetrisch zu einer Symmetrieebene 51 ausgebildet, die durch die Achse 5 bzw. 6 gelegt ist und die mittig zwischen der Außenflanke 42 und der inneren Flanke 45 liegt. Die Mischschaufeln 40 bzw. 41 sind jeweils in gleichen Winkelabständen d ihrer Symmetrieebenen 51 angeordnet, so daß der Winkelabstand d also bei z.B. jeweils vier Mischschaufeln 40 bzw. 41 90° beträgt.

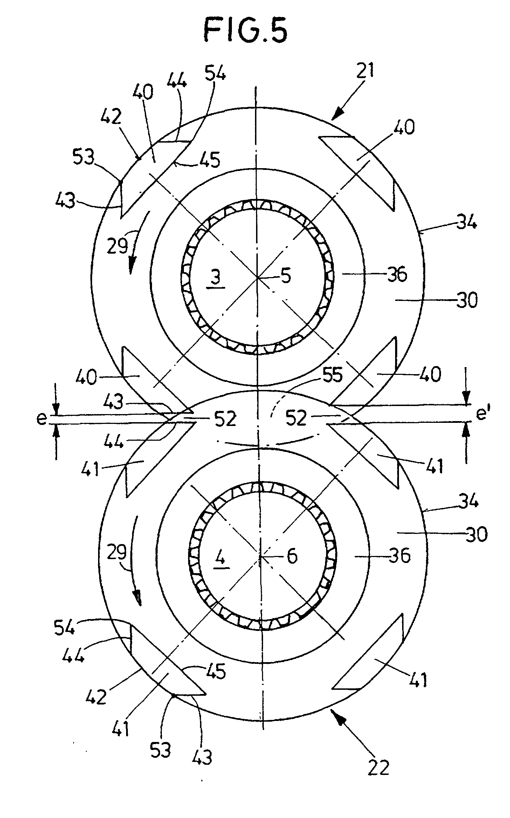

Die voreilenden Flanken 43 und die nacheilenden Flanken 44 sind so ausgebildet, daß diese nicht miteinander kollidieren, sondern beim Vorbeilauf aneinander einen Spalt 52 freilassen. Die voreilende Flanke 43 einer Mischschaufel 40 des Mischelementes 21 befindet sich in Überdeckung mit einer nacheilenden Flanke 44 einer Mischschaufel 41 des Mischelementes 22 und umgekehrt, wenn die Mischelemente 21, 22 gegenüber der in den Fig. 3 und 4 dargestellten Stellung einer völligen Überdeckung der inneren Flanken 45 um ein Winkel d/2 verdreht sind, wie in Fig. 5 dargestellt ist. Hierbei liegt jeweils eine voreilende Flanke 43 einer Mischschaufel 40 einer nacheilenden Flanke 44 einer Mischschaufel 41 und umgekehrt gegenüber. Bevorzugt werden die voreilenden Flanken 43 und die nacheilenden Flanken 44 gleichermaßen wie die inneren Flanken 45 ebenflächig ausgebildet. Damit trotzdem keine Kollisionen zwischen Mischschaufeln 40 und 41 beim Vorbeilaufen der voreilenden bzw. nacheilenden Flanken 43, 44 der Mischschaufeln 40, 41 an den nacheilenden bzw. voreilenden Flanken 43, 44 der Mischschaufeln 41, 40 auftreten, muß dieser Spalt 52 eine ausreichende Breite haben. Diese Breite ändert sich naturgemäß beim Vorbeilaufen einer voreilenden Flanke 43 an einer nacheilenden Flanke 44. In Fig. 5 ist links die minimale Breite e des Spaltes 52 dargestellt. Diese minimale Breite e ergibt sich daraus, daß die Schnittkante 53 zwischen einer voreilenden Flanke 43 und der Außenflanke 42 einer Mischschaufel 40 nicht mit der Schnittkante 54 zwischen einer nacheilenden Flanke 44 und der inneren Flanke 45 einer Mischschaufel 41 und umgekehrt kollidiert. In Fig. 5 ist rechts ein Spalt 52 mit einer größeren Breite e' dargestellt, wobei für die Differenz e'- e wiederum gilt, daß sie einige Zehntel Millimeter bis wenige Millimeter betragen kann, wobei sich dies nach der Größe von R₃₀ und R₃₆ und der Zahl der über den Umfang verteilten Mischschaufeln 40, 41, also dem Winkelabstand d, richtet. Der Vollständigkeit halber sei darauf hingewiesen, daß die voreilenden und nacheilenden Flanken 43 bzw. 44 so als Teilzylinderfläche ausgebildet werden können, daß die Breite e theoretisch gegen 0 gehen könnte.

Der größtmögliche Querschnitt einer Mischschaufel 40 bzw. 41 ist dadurch bestimmt, daß beim Vorbeilaufen zweier einander hinterschneidender Mischschaufeln gemäß der Darstellung in den Fig. 3 und 4 die Breite c des Spaltes 50 in der einander überdeckenden Stellung zweier Mischschaufeln 40, 41 gegen 0 geht, und daß der Spalt 52 beim Vorbeilaufen einer voreilenden Flanke 43 und einer nacheilenden Flanke 44 aneinander gegen e geht. Aus diesem größten Querschnitt könnten im Prinzip beliebige Mischschaufelquerschnitte gebildet werden. Bevorzugt ist aber die vorstehend geschilderte Mischschaufelform, da hierbei die Außenflanken 42 sich jeweils an der Innenwand 31 der jeweiligen Gehäusebohrung 32 bzw. 33 und an der Außenumfangsfläche 46 des jeweils gegenüberliegenden Ringzylinders 36 abstreifen und da die inneren Flanken 45 zwei Mischschaufeln 40, 41 sich aneinander abstreifen und da sich jeweils die voreilenden Flanken 43 der Mischschaufeln 40 bzw. 41 an den nacheilenden Flanken 44 der Mischschaufeln 41 bzw. 40 abstreifen.

Da jede Ringscheibe 30 eines Mischelementes 41, 42 die zugeordnete Gehäusebohrung 32 bzw. 33 verschließt, wird das zu mischende Material, also aufgeschmolzenes Polymer und Füll- und Verstärkungsstoffe, zwangsweise durch eine Mischkammer 55 geführt, die zwischen den beiden Ringscheiben 30 der einander zugewandten Mischelemente 21, 22 gebildet ist. Wie den Fig. 1 bis 3 und insbesondere Fig. 3 entnehmbar ist, staut sich das in Förderrichtung 18 in der Gehäusebohrung 33 geförderte Material vor der Ringscheibe 30 des Mischelementes 22 und wird entsprechend dem Strömungspfeil 56 in die andere Gehäusebohrung 32 umgelenkt und kann dort in Richtung zu der axial in Förderrichtung 18 versetzten Ringscheibe 30 des Mischelemente 21 strömen. Das in der Gehäusebohrung 32 ankommende Material strömt entsprechend dem Strömungspfeil 57 bis vor die Ringscheibe 30 des Mischelementes 21 und wird dort aufgestaut und entsprechend radial in die zwischen den beiden Ringscheiben 30 gebildete Mischkammer 55 umgelenkt. In dieser Mischkammer 55 wird das Material von den einander jeweils hinterschneidenden Mischschaufeln 40, 41 zwangsweise einem distributiven, also verteilenden, Mischprozeß unterzogen. Bei ausreichender Bemaßung der Spalte 50 und 52 tritt nur eine geringe Scherung, also nur eine geringe dispersive Wirkung ein. Glasfaserfilamente und ähnliche kleine Fasern werden bei diesem Mischprozeß entsprechend weniger zerstört.

## Patentansprüche

1. Zwei-Wellen-Schneckenmaschine, insbesondere Zwei-Wellen-Extruder
mit einem Gehäuse (2),
mit zwei zueinander parallelen einander teilweise durchdringenden Gehäusebohrungen (32, 33),
mit einer Aufgabe-Öffnung (9) an einem Ende des Gehäuses und einer Austragsöffnung (28) am anderen Ende des Gehäuses (2),
mit zwei in den Gehäusebohrungen (32, 33) angeordneten, in gleicher Drehrichtung (29) drehantreibbaren Wellen (3, 4), mit auf den Wellen (3, 4) drehfest angebrachten Schneckenelementen (11, 15, 17, 26) und mit auf den Wellen (3, 4) drehfest angebrachten, einander paarweise zugeordneten und einander zugewandten Mischelementen (21, 22), wobei jedes Mischelement (21, 22) eine mit jeweils einer Welle (3, 4) verbundene Scheibe (30) aufweist,
wobei an den einander zugewandten Stirnseiten (39) der Scheibe (30) und im Bereich ihres jeweiligen Außenumfangs (34) in gleichen Winkelabständen (d) Mischschaufeln (40, 41) vorgesehen sind, wobei jeweils eine Mischschaufel (40) eines Mischelementes (21) und eine Mischschaufel (41) des zugeordneten Mischelementes (22) einander hinterschneidend unter Freilassung eines Spaltes (50) aneinander vorbeilaufen,
**dadurch gekennzeichnet,**
**daß** die Scheiben als geschlossene Ringscheiben (30) mit einer Außenumfangsfläche (34) ausgebildet sind, die jeweils lediglich einen Spalt (35) zur Innenwand (31) der jeweiligen Gehäusebohrung (32, 33) begrenzt,
daß jedes Mischelement (21, 22) einen sich an die Stirnseite (39) der Scheibe (30) anschließenden Ringzylinder (36) aufweist und
daß die Außenumfangsfläche (34) einer Ringscheibe (30) des einen Mischelementes (21, 22) mit der Außenumfangsfläche (46) des Ringzylinders (36) des anderen Mischelementes (22, 21) lediglich einen Spalt (47) begrenzt.

2. Schneckenmaschine nach Anspruch 1, **dadurch gekennzeichnet, daß** die geschlossenen Ringscheiben (30) eine zylindrische Außenumfangsfläche (34) aufweisen.

3. Schneckenmaschine nach Anspruch 1 oder 2, **dadurch gekennzeichnet, daß** zwischen den beiden Ringzylindern (36) und den beiden Ringscheiben (30) der beiden einander zugeordneten Mischelemente (21, 22) eine Mischkammer (55) begrenzt ist, in der die Mischschaufeln (40, 41) jeweils einander hinterschneidend aneinander vorbeilaufen.

4. Schneckenmaschine nach einem der Ansprüche 1 bis 3, **dadurch gekennzeichnet, daß** die Mischschaufeln (40, 41) jeweils eine innere Flanke (45) aufweisen, welche Flanken (45) unter Bildung eines Spaltes (50) aneinander vorbeilaufen.

5. Schneckenmaschine nach einem der Ansprüche 1 bis 4, **dadurch gekennzeichnet, daß** die Mischschaufeln (40, 41) jeweils eine Außenflanke (42) aufweisen, die gegenüber der Innenwand (31) der jeweiligen Gehäusebohrung (32, 33) lediglich einen Spalt (35) begrenzt.

6. Schneckenmaschine nach einem der Ansprüche 1 bis 5, **dadurch gekennzeichnet, daß** die Mischschaufeln (40, 41) eine voreilende Flanke (43) und eine nacheilende Flanke (44) aufweisen.

7. Schneckenmaschine nach Anspruch 6, **dadurch gekennzeichnet, daß** die voreilende Flanke (43) einer Mischschaufel (40, 41) eines Mischelementes (21, 22) an einer nacheilenden Flanke (44) einer Mischschaufel (41, 40) des zugeordneten Mischelementes (22, 21) unter Bildung lediglich eines Spaltes (52) vorbeiläuft.

8. Schneckenmaschine nach Anspruch 4, **dadurch gekennzeichnet, daß** die innere Flanke (45) jeder Mischschaufel (40, 41) ebenflächig ausgebildet ist.

9. Schneckenmaschine nach Anspruch 5, **dadurch gekennzeichnet, daß** die Außenflanke (42) jeder Mischschaufel (40, 41) teilzylindrisch und bündig mit der Außenumfangsfläche (34) der Ringscheibe (30) ausgebildet ist.

10. Schneckenmaschine nach Anspruch 6, **dadurch gekennzeichnet, daß** die voreilende Flanke (43) jeder Mischschaufel (40, 41) ebenflächig ausgebildet ist.

11. Schneckenmaschine nach Anspruch 5, **dadurch gekennzeichnet, daß** die nacheilende Flanke (44) jeder Mischschaufel (40, 41) ebenflächig ausgebildet ist.

12. Schneckenmaschine nach einem der Ansprüche 1 bis 11, **dadurch gekennzeichnet, daß** die Mischschaufeln (40, 41) spiegelsymmetrisch zu einer durch die Achse (5, 6) der Wellen (3, 4) gelegten Symmetrieebene (51) ausgebildet sind.

## Claims

1. A twin-shaft screw-type extruding machine, in particular a twin-shaft extruder, comprising
a casing (2),
two intersecting casing bores (32, 33) parallel to each other,
a feed opening (9) at one end of the casing and a discharge opening (28) at the other end of the casing (2),
two shafts (3, 4) disposed in the casing bores (32, 33) and driven to rotate in the same direction of rotation (29),
screw elements (11, 15, 17, 26) disposed non-rotatably on the shafts (3, 4), and
mixing elements (21, 22) facing each other and associated in pairs, which are disposed non-rotatably on the shafts (3, 4),
each mixing element (21, 22) being a disk (30) connected with a shaft (3, 4),
the mixing wings (40, 41) being provided at equal angular distances (d) on the fronts (39), facing each other, of the disk (30) and in the vicinity of the latter's respective circumference (34),
a mixing wing (40) of a mixing element (21) and a mixing wing (41) of the associated mixing element (22) interengaging and rotating past each other, while leaving open a gap (50),
characterized in
that the disks are closed ring disks (30) having a circumferential face (34), which defines a gap (35) towards the inside wall (31) of the respective casing bore (32, 33),
that each mixing element (21, 22) comprises a ring cylinder (36), which is contiguous to the front (39) of the disk (30) and
that the circumferential face (34) of a ring disk (30) of a mixing element (21, 22) in cooperation with the circumferential face (46) of the ring cylinder (36) of the other mixing element (22, 21) defines a gap (47).

2. A twin-shaft screw-type extruding machine according to claim 1, characterized in that the closed ring disks (30) have a cylindrical circumferential face (34).

3. A screw-type extruding machine according to claim1 or 2, characterized in that between the two ring cylinders (36) and the two ring disks (30) of the two associated mixing elements (21, 22), a mixing chamber (55) is defined, in which the mixing wings (40, 41) rotate past each other while interengaging.

4. A screw-type extruding machine according to one of claims 1 to 3, characterized in that the mixing wings (40, 41) each have an inner flank (45), which flanks (45) rotate past each other, forming a gap (50).

5. A screw-type extruding machine according to one of claims 1 to 4, characterized in that the mixing wings (40, 41) each have an outer flank (42), which defines a gap (35) towards the inside wall (31) of the respective casing bore (32, 33).

6. A screw-type extruding machine according to one of claims 1 to 5, characterized in that the mixing wings (40, 41) have a leading flank (43) and a lagging flank (44).

7. A screw-type extruding machine according to claim 6, characterized in that the leading flank (43) of a mixing wing (40, 41) of a mixing element (21, 22) rotates past a lagging flank (44) of a mixing wing (41, 40) of the associated mixing element (22, 21), while forming a gap (52).

8. A screw-type extruding machine according to claim 4, characterized in that the inner flank (45) of each mixing wing (40, 41) is plane.

9. A screw-type extruding machine according to claim 5, characterized in that the outer flank (42) of each mixing wing (40, 41) has the shape of a segment of a cylinder and is flush with the circumferential face (34) of the ring disk (30).

10. A screw-type extruding machine according to claim 6, characterized in that the leading flank (43) of each mixing wing (40, 41) is plane.

11. A screw-type extruding machine according to claim 5, characterized in that the lagging flank (44) of each mixing wing (40, 41) is plane.

12. A screw-type extruding machine according to one of claims 1 to 11, characterized in that the mixing wings (40, 41) are mirror-symmetrical referred to a plane of symmetry (51) placed through the axes (5, 6) of the shafts (3, 4)

## Revendications

1. Machine à vis à deux arbres, notamment extrudeuse à deux arbres, comportant
un carter (2),
deux alésages (32, 33) de carter parallèles s'interpénétrant partiellement,
une ouverture d'alimentation (9) au niveau d'une extrémité du carter, et une ouverture d'évacuation (28) au niveau de l'autre extrémité du carter (2),
deux arbres (3, 4) pouvant être entraînés dans le même sens de rotation (29) disposés dans les alésages (32, 33) de carter,
des éléments à vis (11, 15, 17, 26) fixés solidairement sur les arbres (3, 4), et
des éléments mélangeurs (21, 22) fixés solidairement sur les arbres (3, 4), qui sont associés entre eux par couples et orientés les uns vers les autres,
chaque élément mélangeur (21, 22) comportant un disque (30) relié à un arbre (3, 4) respectif,
des pales mélangeuses (40, 41) étant prévues suivant les mêmes distances angulaires (d) sur les faces frontales (39) orientées l'une vers l'autre du disque (30), et dans la zone de leur circonférence extérieure (34) respective, une pale mélangeuse (40) d'un élément mélangeur (21) et une pale mélangeuse (41) de l'élément mélangeur associé (22) passant en contre-dépouille l'une à côté de l'autre en laissant libre une fente (50),
caractérisée en ce que
les disques sont réalisés sous la forme de disques annulaires fermés (30) avec une surface circonférentielle extérieure (34), qui délimite uniquement une fente (35) vers la paroi intérieure (31) de l'alésage respectif (32, 33) de carter, en ce que chaque élément mélangeur (21, 22) comporte un cylindre annulaire (36) se raccordant à la face frontale (39) du disque (30), et en ce que la surface circonférentielle extérieure (34) d'un disque annulaire (30) de l'un des éléments mélangeurs (21, 22) ne délimite qu'une fente (47) avec la surface circonférentielle extérieure (46) du cylindre annulaire (36) de l'autre élément mélangeur (22, 21).

2. Machine à vis selon la revendication 1, caractérisée en ce que les disques annulaires fermés (30) comportent une surface circonférentielle extérieure cylindrique (34).

3. Machine à vis selon la revendication 1 ou 2, caractérisée en ce qu'une chambre de mélange (55) est délimitée entre les deux cylindres annulaires (36) et les deux disques annulaires (30) des deux éléments mélangeurs (21, 22) associés, dans laquelle les pales mélangeuses (40, 41) passent respectivement en contre-dépouille l'une à côté de l'autre.

4. Machine à vis selon l'une quelconque des revendications 1 à 3, caractérisée en ce que les pales mélangeuses (40, 41) comportent respectivement un flanc intérieur (45), lesquels flancs (45) passent les uns à côté des autres en formant une fente (50).

5. Machine à vis selon l'une quelconque des revendications 1 à 4, caractérisée en ce que les pales mélangeuses (40, 41) comportent respectivement un flanc extérieur (42) qui délimite uniquement une fente (35) par rapport à la paroi intérieure (31) de l'alésage respectif (32, 33) de carter.

6. Machine à vis selon l'une quelconque des revendications 1 à 5, caractérisée en ce que les pales mélangeuses (40, 41) comportent un flanc avançant (43) et un flanc suiveur (44).

7. Machine à vis selon la revendication 6, caractérisée en ce que le flanc avançant (43) d'une pale mélangeuse (40, 41) d'un élément mélangeur (21, 22) passe à côté d'un flanc suiveur (44) d'une pale mélangeuse (41, 40) de l'élément mélangeur associé (22, 21) en formant uniquement une fente (52).

8. Machine à vis selon la revendication 4, caractérisée en ce que le flanc intérieur (45) de chaque pale mélangeuse (40, 41) est réalisé avec une surface plane.

9. Machine à vis selon la revendication 5, caractérisée en ce que le flanc extérieur (42) de chaque pale mélangeuse (40, 41) est réalisé de façon partiellement cylindrique et au même niveau que la surface circonférentielle extérieure (34) du disque annulaire (30).

10. Machine à vis selon la revendication 6, caractérisée en ce que le flanc avançant (43) de chaque pale mélangeuse (40, 41) est réalisé avec une surface plane.

11. Machine à vis selon la revendication 5, caractérisée en ce que le flanc suiveur (44) de chaque pale mélangeuse (40, 41) est réalisé avec une surface plane.

12. Machine à vis selon l'une quelconque des revendications 1 à 11, caractérisée en ce que les pales mélangeuses (40, 41) sont réalisées en symétrie inverse par rapport à un plan de symétrie (51) qui passe par l'axe (5, 6) des arbres (3, 4).
